# EUROPÄISCHE PATENTSCHRIFT

(11) **EP 2 946 924 B1**
(45) Veröffentlichungstag und Bekanntmachung des Hinweises auf die Patenterteilung: **06.01.2021**
(21) Anmeldenummer: 15001549.3
(22) Anmeldetag: 20.05.2015
(51) Int. Cl.: B32B 27/04, B32B 37/14, B32B 37/15, B32B 3/12, C08J 5/12, B32B 37/24

(54) **SANDWICHBAUTEIL SOWIE VERFAHREN ZUR HERSTELLUNG EINES SANDWICHBAUTEILS**
SANDWICH COMPONENT AND METHOD FOR PRODUCING A SANDWICH COMPONENT
ÉLÉMENT SANDWICH ET PROCÉDÉ DE FABRICATION D'UN ÉLÉMENT SANDWICH

(30) Priorität: 23.05.2014 DE 102014007511
(43) Veröffentlichungstag der Anmeldung: 25.11.2015
(73) Patentinhaber: Airbus Defence and Space GmbH, 82024 Taufkirchen (DE)
(72) Erfinder: Grünewald, Jonas, 81547 München (DE); Parlevliet, Patricia, 81539 München (DE); Meer, Thomas, 85658 Egmating (DE)

(56) Entgegenhaltungen:
- EP-A1- 2 011 826
- EP-A2- 0 274 789
- DE-B- 1 238 191
- GB-A- 1 150 656

## Beschreibung

Die vorliegende Erfindung betrifft ein Sandwichbauteil, also ein Bauteil, bei dem Werkstoffe mit verschiedenen Eigenschaften in Schichten zusammengesetzt sind, wobei diese Werkstoffschichten zumindest zwei Deckschichten und einen dazwischen angeordneten Kern umfassen. Ferner betrifft die Erfindung ein Verfahren zur Herstellung eines Sandwichbauteils.

Bekannte Sandwichbauteile besitzen zumeist einen relativ dicken, jedoch leichtgewichtigen Kern, der zwischen zwei demgegenüber dünneren, jedoch mechanisch stabileren Deckschichten angeordnet und mit diesen Deckschichten verbunden (z. B. verklebt) ist.

Derartige, in Sandwichbauweise gefertigte Bauteile können besonders vorteilhaft im Leichtbau eingesetzt werden, beispielsweise als Komponenten im Flugzeugbau.

Bei bekannten Sandwichbauteilen besteht der Kern oftmals aus einem Schaumstoff, oder z. B. aus einer so genannten Wabenstruktur (z. B. aus Papier, Pappe, Kunststoff oder Metall). Als Deckschichten werden im Stand der Technik unter anderem z. B. Metallblech, Holz bzw. Sperrholz oder Faserverbundwerkstoffe eingesetzt.

Ein grundsätzliches Problem bei der Herstellung eines Sandwichbauteils besteht darin, im Hinblick auf die Stabilität des fertigen Bauteils eine möglichst gute (mechanisch belastbare) Anbindung der Deckschichten an den Kern zu erzielen.

Eine Möglichkeit hierfür ist eine "adhäsive Anbindung", d. h. das Verbinden des Kerns mit den Deckschichten mit Hilfe eines Klebstoffes oder einer Klebeschmelzschicht.

Je nach Beschaffenheit der miteinander zu verklebenden Materialien ergibt sich bei diesem Verfahren jedoch oftmals der Nachteil einer unzureichenden Festigkeit der auf Adhäsion beruhenden Verbindung.

Zur Vermeidung dieses Nachteils kommt in Betracht, die Deckschichten durch eine "kohäsive Anbindung" mit dem Kern zu verbinden, d. h. durch eine Schmelzverbindung zwischen Kern- und Deckschichten, ohne Verwendung eines Zusatzmaterials. Hierfür werden die aneinander angrenzenden Materialien erweicht bzw. aufgeschmolzen, unter Druck verbunden, und wieder verfestigt.

Abgesehen davon, dass diese kohäsive Anbindung die Auswahl erweich- bzw. aufschmelzbarer und darüber hinaus entsprechend kompatibler (miteinander verschmelzbarer) Werkstoffe voraussetzt, ergibt sich bei diesem Verfahren in der Praxis oftmals der gravierende Nachteil (bzw. ein Grund, dieses Verfahren nicht anzuwenden), der darin besteht, dass durch das Erweichen bzw. Aufschmelzen der Materialien und das Zusammenfügen unter Druck die Deckschichten und/oder der Kern beschädigt werden.

Dieses Problem ist z. B. besonders gravierend, wenn als Kern eine aus einem Thermoplastmaterial gebildete Wabenstruktur eingesetzt werden soll. Eine zur Schaffung einer kohäsiven Anbindung eingesetzte Temperatur- und Druckbeaufschlagung eines solchen Wabenkerns führt in der Regel zu einer unerwünschten und nachteiligen Verformung bzw. zu einem "Kollabieren" der Wabenstruktur.

Die EP 0 274 789 A2 beschreibt ein Sandwichbauteil mit einem Kern, der eine Wabenstruktur aufweist, und zwei Decklagen, die mit Kontaktoberflächen des Kerns verbunden sind. Die Decklagen sind als einschichtige faserverstärkte Kunststofflagen ausgebildet. Zum Fügen von Kern und Decklagen wird auf die Kontaktoberflächen des Kerns wird ein Lösungsmittel, z.B. in Form einer Lage aus einem thermoplastischen Material, das mit dem Lösungsmittel vorbehandelt ist aufgebracht. Anschließend erfolgt ein Zusammenpressen der Decklagen und des Kerns bei erhöhter Temperatur, wodurch die Lagen verbunden werden.

Die EP 2 011 826 A1 offenbart eine Epoxidharz-Zusammensetzung für Faserverbundhalbzeuge, die zur Verbindung mit einer Wabenstruktur vorgesehen sind.

Die DE 1 238 191 A beschreibt ein Verfahren zur Herstellung einer Verbundplatte, wobei auf eine Kernsicht eine Zwischenschicht aus einer mit einem Lösungsmittel getränkten Kunststofffolie aufgebracht wird. Das Lösungsmittel löst die Kernschicht an deren Oberfläche an, wodurch eine Verbindung der Kernschicht mit der Zwischenschicht erzielt wird. Anschließend wird eine Deckschicht dadurch erzeugt, dass eine Fasermatte auf die Zwischenschicht aufgelegt und mit Gießharz durchtränkt wird.

Die GB 1 150 656 A beschreibt ferner ein Verfahren zur Herstellung eines Verbundbauteils, welches einen Kern und zwei Decklagen aufweist. Die Decklagen weisen jeweils eine erste Schicht aus einem ersten, erweichbaren Harz und eine zweite Schicht aus einem zweiten, synthetischen Harz auf. Der Kern wird so zwischen den Decklagen angeordnet, dass dieser jeweils mit den ersten Schichten der Decklagen in Kontakt ist. Anschließend erfolgt ein Erwärmen auf eine Temperatur oberhalb der Erweichungstemperatur des ersten Harzes, wodurch der Kern und die Decklagen verbunden werden.

Es ist eine Aufgabe der vorliegenden Erfindung, ein Sandwichbauteil sowie ein Verfahren zur Herstellung eines Sandwichbauteils anzugeben, bei welchen die vorstehenden Probleme vermieden sind.

Diese Aufgabe wird erfindungsgemäß durch ein Sandwichbauteil nach Anspruch 1 bzw. ein Herstellungsverfahren nach Anspruch 6 gelöst. Die abhängigen Ansprüche betreffen vorteilhafte Weiterbildungen der Erfindung.

Das erfindungsgemäße Sandwichbauteil umfasst eine erste Deckschicht, eine zweite Deckschicht und einen dazwischen angeordneten Kern, wobei die Deckschichten jeweils aus einer Außenlage aus einem faserverstärkten Thermoplastmaterial mit höherer Resistenz gegenüber einem organischen Lösungsmittel zur Lösung von Thermoplatmaterialen und damit verschmolzen einer Innenlage aus einem Thermoplastmaterial mit niedrigerer Resistenz gegenüber dem organischen Lösungsmittel gebildet sind, wobei der Kern Außenlagen aufweist, die jeweils aus einem Thermoplastmaterial mit niedrigerer Resistenz gegenüber dem organischen Lösungsmittel gebildet sind, und eine Innenstruktur, die ganz oder teilweise aus einem Thermoplastmaterial mit höherer Resistenz gegenüber dem organischen Lösungsmittel gebildet ist, und wobei die Innenlagen der Deckschichten mit jeweils einer der Außenlagen des Kerns unter Einsatz des organischen Lösungsmittels verschmolzen wurden.

Bei dem erfindungsgemäßen Verfahren zur Herstellung eines derartigen Sandwichbauteils werden zunächst die erste Deckschicht, die zweite Deckschicht und der Kern bereitgestellt (vorgefertigt).

Sodann erfolgt eine Applikation eines organischen Lösungsmittels auf die im fertigen Sandwichbauteil dem Kern zugewandten Seiten der Innenlagen der Deckschichten und dadurchein Anlösen der Innenlagen der Deckschichten Weiterhin erfolgt auch eine Applikation des organischen Lösungsmittels auf die im fertigen Sandwichbauteil den Deckschichten zugewandten Seiten der Außenlagen des Kerns und dadurch ein Anlösen der Außenlagen des Kerns.

Wesentlich ist hierbei die Verwendung eines Lösungsmittels, welches die genannten "Thermoplastmaterialien mit höherer Resistenz" kaum bis gar nicht angreift, insbesondere nicht nenneswert erweicht, wohingegen dieses Lösungsmittel die genannten "Thermoplastmaterialien mit niedrigerer Resistenz" angreift und insbesondere für die nachfolgende Verschmelzung hinreichend erweicht.

Schließlich wird jede der mittels des verwendeten Lösungsmittels angelösten Innenlagen der Deckschichten an jeweils einer der angelösten Außenlagen des Kerns angefügt und somit verschmolzen.

Der Begriff "verschmolzen" bedeutet ganz allgemein, dass die betreffenden Thermoplastmaterialien entweder zumindest oberflächlich auf mindestens die Erweichungstemperatur (im Falle verschiedener Thermoplastmaterialien die größere der beiden Erweichungstemperaturen) gebracht und in diesem Zustand aneinandergefügt wurden, oder dass die betreffenden Thermoplastmaterialien zumindest oberflächlich durch Applikation eines Lösungsmittels erweicht (angelöst) und aneinandergefügt wurden, wobei bei diesem Verschmelzungsvorgang in jedem Fall eine mehr oder weniger große Diffusion der Materialien der Fügepartner ineinander und somit eine "kohäsive Anbindung" erfolgt. Der Begriff "Erweichungstemperatur" bezeichnet hier eine Temperatur, bei welcher das betreffende Material erweicht

bzw. aufschmilzt, so dass durch Anfügen eines ebenfalls erweichten bzw. aufgeschmolzenen weiteren Materials eine kohäsive Anbindung geschaffen werden kann. Der Begriff "durch Applikation eines Lösungsmittels erweicht (angelöst)" bezeichnet einen Angriff, bei welchem das betreffende Material soweit erweicht, dass durch Anfügen eines ebenfalls erweichten bzw. aufgeschmolzenen weiteren Materials eine kohäsive Anbindung geschaffen werden kann.

Die Begriffe "höhere Resistenz" und "niedrigere Resistenz" (gegenüber dem vorbestimmten Lösungsmittel) sind im Rahmen der Erfindung so zu verstehen, dass ein Thermoplastmaterial mit höherer Resistenz bei Applikation des Lösungsmittels nur kaum bis gar nicht angegriffen wird (insbesondere nicht nenneswert erweicht), wohingegen das Thermoplastmaterial mit niedrigerer Resistenz bei Applikation des gleichen Lösungsmittels (und unter gleichen Applikationsbedingungen wie Temperatur und Einwirkzeit) stark angegriffen und hierbei jedenfalls erweicht (angelöst) wird.

Der Begriff "erweicht (angelöst)" bezeichnet hier einen Zustand, in welchem das betreffende Material durch Anfügen eines ebenfalls erweichten bzw. aufgeschmolzenen weiteren Materials verschmolzen werden kann.

Im Rahmen der Erfindung ist es keineswegs ausgeschlossen, dass mehrere verschiedene "Thermoplastmaterialien mit höherer Lösungsmittelresistenz", nachfolgend auch als "lösungsmittelresistente Thermoplastmaterialien" bezeichnet, und/oder mehrere verschiedene "Thermoplastmaterialien mit niedrigerer Lösungsmittelresistenz", nachfolgend auch als "nicht lösungsmittelresistente Thermoplastmaterialien" bezeichnet, im Sandwichbauteil vorhanden bzw. im Herstellungsverfahren verarbeitet werden.

Anders ausgedrückt bezeichnen die Begriffe "höhere Resistenz" und "niedrigere Resistenz" den Umstand, dass wenigstens ein bestimmtes Lösungsmittel mitsamt Applikationsbedingungen (z. B. Applikationstemperatur und -dauer) angegeben werden kann, derart, dass das bzw. die lösungsmittelresistenten Thermoplastmaterialien bei dessen Applikation nicht für eine Verschmelzung geeignet erweicht (angelöst) werden, wohingegen das bzw. die nicht lösungsmittelresistenten Thermoplastmaterialien durch die gleiche Applikation für eine Verschmelzung geeignet erweicht (angelöst) werden.

Für die konkrete Wahl des für die Erfindung vorzubestimmenden bzw. beim Herstellungsverfahren einzusetzenden Lösungsmittels, und damit im Zusammenhang stehend die konkrete Wahl von gegenüber diesem Lösungsmittel "resistenten" und "nicht resistenten" Thermoplastmaterialien stehen dem Fachmann vielfältige Möglichkeiten zur Verfügung. Vorteilhaft kann diesbezüglich insbesondere auf bereits publizierte Tabellen und Nachschlagewerke betreffend die jeweilige Resistenz einer Vielzahl von Thermoplastmaterialien gegenüber bestimmmten Lösungsmitteln zurückgegriffen werden.

Im Rahmen der Erfindung nutzbare Methoden zur Bestimmung bzw. Charakterisierung und Vorhersage von Resistenzen von Materialien gegenüber Lösungsmitteln sind z. B. beschrieben in "Hansen Charles M., Hansen Solubility Parameters - A User's Handbook", Second Edition, CRC Press, Taylor & Francis Group, 2007, ISBN: 0-8493-7248-8".

Wie oben bereits erläutert besteht eine Besonderheit des erfindungsgemäßen Sandwichbauteils darin, dass die Deckschichten jeweils aus einer Außenlage aus einem faserverstärkten "lösungsmittelresistenten" Thermoplastmaterial und damit verschmolzen einer Innenlage aus einem davon verschiedenen, "nicht lösungsmittelresistenten" Thermoplastmaterial gebildet sind. Insofern besitzt jede der Deckschichten zwei Lagen, die jedoch (thermisch oder alternativ durch geeignete Lösungsmittelapplikation) miteinander verschmolzen und somit vorteilhaft kohäsiv miteinander verbunden sind, wobei darüber hinaus eine kohäsive Anbindung vorteilhaft auch zwischen den Deckschichten und dem Kern dadurch vorgesehen ist, dass durch geeignete Lösungsmittelapplikation die jeweils aus einem "nicht lösungsmittelresistenten" Thermoplastmaterial gebildeten Außenlagen des Kerns mit den ebenfalls jeweils aus einem "nicht lösungsmittelresistenten" Thermoplastmaterial gebildeten Innenlagen der Deckschichten verschmolzen sind.

Das erfindungsgemäße Sandwichbauteil besitzt somit sämtliche Vorteile der eingangs erläuterten "kohäsiven Anbindung" der Deckschichten an den Kern, vermeidet hierbei jedoch die Gefahr einer nennenswerten Beschädigung der Deckschichten und/oder des Kerns im Rahmen der Herstellung des Sandwichbauteils, weil es für die Aneinanderfügung der Deckschichten und des Kerns zur Schaffung der kohäsiven Anbindung möglich ist, an den Deckschichten und am Kern ein Lösungsmittel zu applizieren, welches bei den Deckschichten selektiv im Wesentlichen nur die Deckschicht-Innenlagen angreift und erweicht (anlöst) und beim Kern selektiv im Wesentlichen nur die Kern-Außenlagen angreift und erweicht (anlöst).

Mit anderen Worten ist ein Zusammenfügen und somit Verschmelzen der Deckschichten und des Kerns vorteilhaft derart möglich, dass hierbei weder die Außenlagen der Deckschichten noch die Innenstruktur des Kerns erweicht.

In einer Ausführungsform ist vorgesehen, dass die nicht lösungsmittelresistenten Thermoplastmaterialien einerseits einer Innenlage einer Deckschicht und andererseits der damit verschmolzenen Außenlage des Kerns identisch sind.

In einer Weiterbildung dieser Ausführungsform sind sämtliche nicht lösungsmittelresistenten Thermoplastmaterialien, also diejenigen der Innenlagen der beiden Deckschichten und diejenigen der Außenlagen des Kerns, identisch. Falls, was jedoch weniger bevorzugt ist, die nicht lösungsmittelresistenten Thermoplastmaterialien einer Innenlage einer Deckschicht und der damit verschmolzenen Außenlage des Kerns nicht identisch gewählt sind, so ist lediglich deren Kompatibilität im Sinne einer Verschmelzbarkeit (Mischbarkeit) der beiden Materialien sicherzustellen.

In einer Ausführungsform ist wenigstens eines der Thermoplastmaterialien gewählt aus der Gruppe bestehend aus ABS (Acrynitril-Butadien-Styrol), PA (Polyamid), PBT (Polybutylenterephthalat), PC (Polycarbonat), PEEK (Polyetheretherketon), PEI (Polyetherimid), PES (Polyethersulfon), PET (Polyethyleneterephthalat), PP (Polypropylen), PPS (Polyphenylensulfid), PPSU (Polyphenylsulfon), PSU (Polysulfon).

In einer insbesondere für Anwendungen des Sandwichbauteils in der Luft- und Raumfahrtindustrie geeigneten Ausführungsform ist wenigstens eines der Thermoplastmaterialien z. B. gewählt aus der Gruppe bestehend aus PEEK, PEI, PES, PPS, PPSU, PSU.

Insbesondere im Hinblick auch auf andere Anwendungen kann z. B. vorgesehen sein, dass wenigstens eines der Thermoplastmaterialien gewählt ist aus der Gruppe bestehend aus ABS, PA, PBT, PC, PP.

In einer Ausführungsform ist als lösungsmittelresistentes Thermoplastmaterial PEEK (z. B. resistent gegenüber Dichlormethan (DCM)) vorgesehen, sei es für wenigstens eine (oder beide) Außenlagen der Deckschichten und/oder die Innenstruktur des Kerns.

In einer Ausführungsform ist als nicht lösungsmittelresistentes Thermoplastmaterial PEI (z. B. nicht resistent gegenüber DCM) vorgesehen, sei es für wenigstens eine (oder beide) Innenlagen der Deckschichten und/oder wenigstens eine (oder beide) Außenlagen des Kerns.

In einer Ausführungsform ist die Außenlage wenigstens einer der Deckschichten mit Kohlenstofffasern verstärkt. Anstelle von Kohlenstofffasern können jedoch auch andere Verstärkungsfasern vorgesehen sein, z. B. Glasfasern. Zumeist ist es zweckmäßig, die Außenlagen der Deckschichten mit gleichartigen Fasern zu verstärken, also beide Außenlagen z. B. mit Kohlenstofffasern oder mit Glasfasern. Es soll jedoch nicht ausgeschlossen sein, die Außenlagen der beiden Deckschichten mit verschiedenartigem Fasermaterial zu verstärken.

Das Fasermaterial, welches in den Außenlagen der Deckschichten von dem lösungsmittelresistenten Thermoplastmaterial als "Matrixmaterial" umgeben ist, kann jeweils z. B. in Form von einer oder mehrerer Lagen eines Gewebes, Geleges oder Geflechtes vorgesehen sein. Alternativ oder zusätzlich kommt in Betracht, wirr im Matrixmaterial angeordnete "kurze Fasern" vorzusehen.

Das Matrixmaterial kann für beide Deckschichten gleichartig gewählt sein. Es soll jedoch nicht ausgeschlossen sein, für die Außenlagen der beiden Deckschichten verschiedenartige lösungsmittelresistente Thermoplastmaterialien vorzusehen.

In einer Ausführungsform ist als Matrixmaterial für die Außenlage wenigstens einer, insbesondere beider Deckschichten PEEK verwendet.

In einer Ausführungsform ist als Material für die Innenlage wenigstens einer, insbesondere beider Deckschichten PEI verwendet.

In einer Ausführungsform ist für wenigstens eine, insbesondere beide Deckschichten vorgesehen, dass die Dicke der Deckschicht mindestens 0,2 mm, insbesondere mindestens 0,4 mm beträgt.

In einer Ausführungsform ist für wenigstens eine, insbesondere beide Deckschichten vorgesehen, dass die Dicke der Deckschicht höchstens 6 mm, insbesondere höchstens 3 mm beträgt.

In einer Ausführungsform ist für wenigstens eine, insbesondere beide Deckschichten vorgesehen, dass die Dicke der Innenlage mindestens das 0,01-fache, insbesondere mindestens das 0,1-fache der Gesamtdicke der betreffenden Deckschicht beträgt.

In einer Ausführungsform ist für wenigstens eine, insbesondere beide Deckschichten vorgesehen, dass die Dicke der Innenlage höchstens das 0,5-fache, insbesondere höchstens das 0,3-fache der Gesamtdicke der betreffenden Deckschicht beträgt.

In einer Ausführungsform ist der Kern von einer Schaumstoffschicht (Innenstruktur) aus einem lösungsmittelresistenten Thermoplastmaterial mit beiderseits damit verschmolzenen Außenlagen jeweils aus einem nicht lösungsmittelresistenten Thermoplastmaterial gebildet.

In einer anderen Ausführungsform ist der Kern ein so genannter Wabenkern. Sandwichbauteile mit Wabenkern sind aus dem Stand der Technik bekannt, etwa mit einem Wabenkern aus Pappe, harzgetränktem Papier, Faserkunststoff oder dünnen Aluminiumfolien.

Wenn bei dem erfindungsgemäßen Sandwichbauteil der Kern als Wabenkern ausgebildet ist, so muss dieser Außenlagen aufweisen, die aus einem nicht lösungsmittelresistentenThermoplastmaterial gebildet sind, und eine wabenförmige Innenstruktur, die wenigstens teilweise aus einem lösungsmittelresistenten Thermoplastmaterial besteht.

Hierfür denkbar wäre beispielsweise eine aus dem lösungsmittelresistenten Thermoplastmaterial (z. B. PEEK im Falle von z. B. DCM als Lösungsmittel) gebildete Wabenstruktur, die beiderseits mit Außenlagen (äußerste Lagen von "Wabenstrukturdeckschichten") aus jeweils einem nicht lösungsmittelresistenten Thermoplastmaterial (z. B. PEI im Falle von z. B. DCM als Lösungsmittel) fest verbunden, insbesondere (z. B. thermisch) verschmolzen ist.

In einer Ausführungsform sind die beiden Außenlagen des Kerns aus einem identischen nicht lösungsmittelresistenten Thermoplastmaterial gebildet.

Gemäß einer bevorzugten Weiterbildung der Ausführung mit einem Wabenkern ist vorgesehen, dass derselbe als eine so genannte Faltwabe bzw. Faltwabenstruktur ausgebildet ist.

Eine Faltwabenstruktur ist dadurch gekennzeichnet, dass diese ausgehend von einem flächigen Körper aus einem plastisch verformbaren Material (z. B. thermoplastische Kunststofffolie) gebildet wurde, indem dieser Körper derart plastisch verformt (einschließlich "gefaltet") wurde, dass damit die Wabenstruktur entsteht. Gegebenenfalls kann dem Verformungs- und Faltprozess auch ein Einbringen von Schnitten in das flächige Material vorangehen.

Für die konkrete Gestaltung einer solchen Faltwabenstruktur bzw. deren Herstellung kann im Rahmen der Erfindung vorteilhaft z. B. auf diesbezüglichen Stand der Technik zurückgegriffen werden. Lediglich beispielhaft seinen hierzu die Patentveröffentlichungen WO 97/03816, WO 00/32382, DE 10 2006 056 353 B3 und DE 10 2008 028 864 B4 genannt.

Der hier verwendete Begriff "Faltwabenstruktur" soll sowohl Strukturen mit vertikal (in "Sandwichrichtung") verlaufenden Zellen- bzw. Wabenwänden als auch Strukturen mit schräg verlaufenden Wänden umfassen. Demgegenüber werden im Stand der Technik (vgl. z. B. DE 10 2006 056 353 B3 und DE 10 2008 028 864 B4) erstere Strukturen, jedenfalls bei im Querschnittt sechseckigen Waben, oftmals auch als "honeycomb"-Strukturen und zweitere Strukturen als Faltwaben bezeichnet.

In einer Ausführungsform ist vorgesehen, dass die Dicke des Kerns mindestens 3 mm, insbesondere mindestens 6 mm oder mindestens 10 mm beträgt.

In einer Ausführungsform ist vorgesehen, dass die Dicke des Kerns höchstens 50 mm, insbesondere höchstens 25 mm beträgt. Im Hinblick auf den Anwendungsfall einer Nutzung des Sandwichbauteils (auch) zur Wärmedämmung ist jedoch auch denkbar, den Kern (insbesondere z. B. mit einer Innenstruktur aus Schaumstoff) mit einer Dicke von mehr als 25 mm vorzusehen, z. B. bis zu einer Dicke von 100 mm oder sogar 200 mm.

In einer Ausführungsform ist für wenigstens eine, insbesondere beide Außenlagen des Kerns vorgesehen, dass die Dicke der aus lösungsmittelresistentem Thermoplastmaterial gebildeten Außenlage mindestens das 0,0001-fache, insbesondere mindestens das 0,01-fache der Gesamtdicke des Kerns beträgt.

In einer Ausführungsform ist für wenigstens eine, insbesondere beide Außenlagen des Kerns vorgesehen, dass die Dicke der aus lösungsmittelresistentem Thermoplastmaterial gebildeten Außenlage höchstens das 0,1-fache, insbesondere höchstens das 0,05-fache der Gesamtdicke des Kerns beträgt.

Die Besonderheit des erfindungsgemäßen Verfahrens zur Herstellung eines Sandwichbauteils der hier beschriebenen Art besteht darin, die wie beschrieben speziell ausgebildeten (vorgefertigten) Deckschichten mit dem wie beschrieben speziell ausgebildeten (vorgefertigten) Kern unter Einsatz eines geeigneten Lösungsmittels zu verschmelzen.

Zum Bereitstellen der Deckschichten kann vorteilhaft jeweils z. B. eine vorgefertigte Außenlage (flächiger Faserverbundwerkstoff) mit einer vorgefertigten Innenlage (z. B. konfektioniertes Thermoplastfolienmaterial) durch Anwendung von Druck und Temperatur, z. B. in einem Formwerkzeug oder z. B. in einem kontinuierlichen Laminierprozess, verschmolzen werden. Alternativ kommt in Betracht, bereits bei der Herstellung des Faserverbundwerkstoffes (Außenlage) die Innenlage sogleich "aufzulaminieren".

Zum Bereitstellen des Kerns kann z. B. in einem ähnlichen Verschmelzungsprozess eine vorgefertigte Schaumstofflage aus einem lösungsmittelresistenten Thermoplastmaterial beiderseits mit Außenlagen eines nicht lösungsmittelresistenten Thermoplastmaterials versehen werden.

In einer bevorzugten Ausführungsform wird jedoch zum Bereitstellen des Kerns eine mit einem nicht lösungsmittelresistenten Thermoplastmaterial beidseitig beschichtete Folie eines lösungsmittelresistenten Thermoplastmaterials zur Ausbildung einer Faltwabenstruktur umgeformt.

Ein derartiges Verfahren zur Herstellung einer Faltwabenstruktur kann, abgesehen von der im Rahmen der Erfindung hierfür mit einem nicht lösungsmittelresistenten Thermoplastmaterial beschichteten Folie eines lösungsmittelresistenten Thermoplastmaterials, vorteilhaft gemäß an sich bekannter Verfahren bewerkstelligt werden. Ein Beispiel hierfür ist das in der WO 00/32382 beschriebenen Verfahren, umfassend folgende Schritte:
- Bereitstellen eines flächigen Körpers aus einem plastisch verformbaren Material,
- Verformen des flächigen Körpers in streifenförmigen Bereichen vieleckig, sinus- oder kreisförmig, wobei die zwischen diesen Bereichen liegenden streifenförmigen Bereich abwechselnd ganz oder gar nicht aus der Ebene des flächigen Ausgangskörpers geformt werden, und
- Falten der vieleckig, sinus- oder kreisförmig plastisch verformten Bereiche gegenüber den streifenförmigen Bereichen um etwa 90°.

Die resultierende Faltwabenstruktur ist dann aus einer Mehrzahl von in Reihen angeordneten Zellen (Waben) gebildet, wobei die Zellen seitliche Zellwände aufweisen, die ringförmig aneinander anschließen und zu den Öffnungsseiten der Zelle hin von Wabendeckschichtebenen begrenzt werden, wobei die Zellen insbesondere in beiden Wabendeckschichtebenen vollständig überbrückt sein können. Die Zellwände können hierbei ganz oder teilweise dauerhaft miteinander verbunden sein.

Wenn bei diesem an sich bekannten Verfahren zur Herstellung einer Faltwabenstruktur im Rahmen der Erfindung als flächiger Ausgangskörper wie erwähnt eine aus verschiedenen Thermoplastmaterialien in Schichten zusammengesetzte Folie verwendet wird, z. B. mit einer Innenlage aus lösungsmittelresistentem Thermoplastmaterial und beiderseits damit verschmolzen Außenlagen aus einem jeweils nicht lösungsmittelresistenten Thermoplastmaterial, so ergibt sich ein bei der Erfindung einsetzbarer Faltwabenkern mit Außenlagen (äußerste Lage der Wabenstrukturdeckschichten) aus dem betreffenden nicht lösungsmittelresistenten Thermoplastmaterial und einer Innenstruktur, die teilweise aus lösungsmittelresistentem und teilweise aus nicht lösungsmittelresistentem (jedoch vorteilhaft "innenliegendem" und somit nicht so leicht angreifbarem) Thermoplastmaterial gebildet ist.

Im letzten Schritt des erfindungsgemäßen Verfahrens zur Herstellung eines Sandwichbauteils werden die Innenlagen der Deckschichten mit jeweils einer der Außenlagen des Kerns unter Einsatz des Lösungsmittels verschmolzen.

Bei diesem Verschmelzen unter Einsatz einer Applikation des Lösungsmittels, ggf. auch unter Anwendung einer erhöhten, z. B. über Raumtemperatur erhöhtenTemperatur, wird zunächst das Lösungsmittel zumindest solange auf die betreffenden Fügeflächen einwirken gelassen, bis diese für die Verschmelzung geeignet erweicht (angelöst) sind.

Die Einwirkungsdauer des Lösungsmittels und/oder eine hierbei angewendete Temperatur können auch höher als unbedingt erforderlich gewählt werden, wobei in diesem Fall lediglich sichergestellt sein sollte, dass durch diese "Applikationsbedingung" kein wesentlicher Angriff (Erweichung) der nicht am Fügeprozess beteiligten Thermoplastmaterialanteile erfolgt.

Gemäß einer vorteilhaften Weiterbildung der Bereitstellung des Kerns als eine Faltwabenstruktur durch Umformen einer mit nicht lösungsmittelresistentem Thermoplastmaterial beschichteten Folie eines lösungsmittelresistenten Thermoplastmaterials ist vorgesehen, dass diese Beschichtung in Anpassung an den konkreten Umformprozess nur bereichsweise derart durchgeführt wird, dass das nicht lösungsmittelresistente Thermoplastmaterial an der fertigen Faltwabenstruktur nur im Bereich der Faltwabenstrukturdeckschichten vorhanden ist, nicht jedoch im Bereich der Innenstruktur der Faltwabenstruktur. Mit dieser Weiterbildung wird die Gefahr beseitigt, dass bei dem finalen Herstellungsschritt für das Sandwichbauteil unter Einsatz des Lösungsmittels eine Erweichung der ansonsten in der Innenstruktur vorhandenen durch das Lösungsmittel erweichbaren Thermoplastanteile erfolgt.

Die Erfindung wird nachfolgend anhand eines Ausführungsbeispiels mit Bezug auf die beigefügten Zeichnungen weiter beschrieben. Es stellen jeweils schematisch dar:
- **Fig. 1**: ein Vorfertigen einer Deckschicht für ein Sandwichbauteil,
- **Fig. 2**: die vorgefertigte Deckschicht,
- **Fig. 3**: eine Vorfertigung einer Thermoplastfolie zur Verwendung als Aus-gangsmaterial zur Herstellung einer Faltwabenstruktur,
- **Fig. 4**: die vorgefertigte Thermoplastfolie,
- **Fig. 5**: eine Vorfertigung der Faltwabenstruktur aus der Thermoplastfolie von Fig. 4,
- **Fig. 6**: eine Fertigung des Sandwichbauteils durch Verschmelzen zweier Deckschichten der in Fig. 2 dargestellten Art mit einem gemäß des Ver-fahrens von Fig. 5 vorgefertigten Kerns, und
- **Fig. 7**: das fertige Sandwichbauteil.

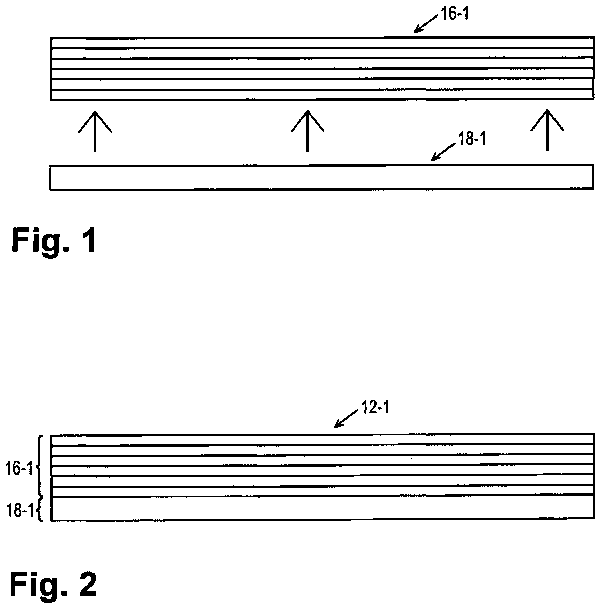

Die Fig. 1 bis 7 veranschaulichen die Herstellung eines Sandwichbauteils gemäß eines Ausführungsbeispiels.

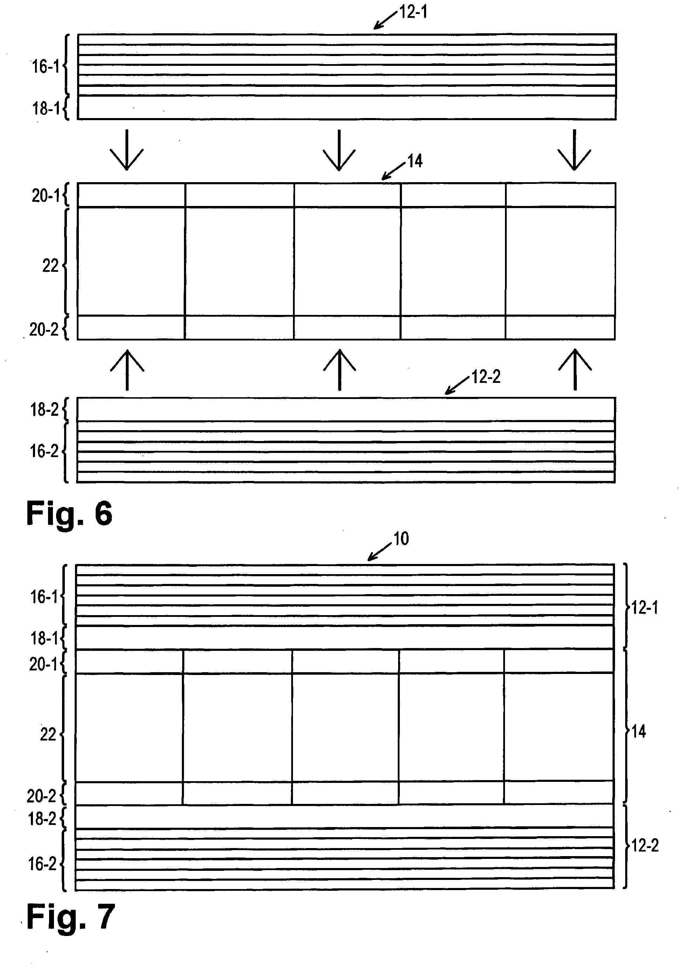

Zunächst wird mit Bezug auf Fig. 7 auf die Gestaltung des fertigen Sandwichbauteils 10 eingegangen. Sodann wird anhand der Fig. 1 bis 6 das zur Herstellung des Sandwichbauteils 10 verwendete Verfahren beschrieben.

Fig. 7 zeigt das fertige Sandwichbauteil 10, umfassend eine erste Deckschicht 12-1, eine zweite Deckschicht 12-2 und einen dazwischen angeordneten Kern 14.

Die Deckschichten 12-1 und 12-2 sind jeweils aus einer Außenlage 16-1 aus einem faserverstärkten Thermoplastmaterial mit "höherer Resistenz" gegenüber einem vorbestimmten Lösungsmittel (z. B. DCM) und damit verschmolzen (z. B. thermisch verschmolzen) einer Innenlage 18-1 aus einem Thermoplastmaterial mit "niedrigerer Resistenz" gegenüber dem vorbestimmten Lösungsmittel gebildet.

Im dargestellten Beispiel handelt es sich bei der Außenlage 16-1 um einen Faserverbundwerkstoff, bei welchem ein ein- oder mehrlagiges Kohlenstofffasermaterial in einer Matrix von PEEK eingebettet ist. Das PEEK stellt in diesem Beispiel z. B. ein gegenüber einer Applikation von DCM im Wesentlichen resistentes Thermoplastmaterial der Deckschicht 12-1 dar, d.h. bei einer Applikation von DCM wird dieses Thermoplastmaterial kaum angegriffen und insbesondere nicht nennenswert erweicht (angelöst). Ein solches Thermoplastmaterial wird nachfolgend vereinfachend als "lösungsmittelresistent" bzw. "DCM-resistent" bezeichnet.

Demgegenüber ist die Innenlage 18-1 im dargestellten Beispiel von PEI gebildet, welches in diesem Beispiel z. B. ein durch Applikation von DCM erweichbares (anlösbares) Thermoplastmaterial der Deckschicht 12-1 darstellt. Ein solches Thermoplastmaterial wird nachfolgend vereinfachend als "nicht lösungsmittelresistent" bzw. "nicht DCM-resistent" bezeichnet.

Der Kern 14 weist den Deckschichten 12-1, 12-2 zugewandte Außenlagen 20-1 und 20-2 auf, die jeweils aus einem nicht DCM-resistenten Thermoplastmaterial, hier PEI, gebildet sind und eine wabenartige Innenstruktur 22, die teilweise aus DCM-resistentem Thermoplastmaterial, hier PEEK, und teilweise aus nicht DCM-resistentem Thermoplastmaterial, hier PEI, gebildet ist.

Die Innenlagen 18-1, 18-2 der Deckschichten 12-1, 12-2 sind mit jeweils einer der Außenlagen 20-1, 20-2 des Kerns 14 verschmolzen, wobei das Verschmelzen durch Aneinanderfügung der durch Applikation von DCM an den betreffenden Verschmelzungs(füge)flächen durchgeführt wurde.

Das Sandwichbauteil 10 kann besonders vorteilhaft z. B. als Komponente, insbesondere flächig ausgedehnte Komponente (Rumpfabschnitt, Paneel etc.) im Fahrzeug- oder Flugzeugbau verwendet werden.

Die Fig. 1 bis 6 zeigen einzelne Schritte bzw. Stadien bei der Herstellung des in Fig. 7 dargestellten Sandwichbauteils 10.

In einem ersten Schritt werden die Deckschichten 12-1, 12-2 sowie der Kern 14 vorgefertigt.

Die Vorfertigung der Deckschichten 12-1 und 12-2 erfolgt wie in Fig. 1 beispielhaft für die Deckschicht 12-1 veranschaulicht durch ein miteinander Verschmelzen (kohäsive Anbindung, bevorzugt durch thermische Verschmelzung) der zuvor in Faserverbundtechnologie hergestellten Außenlage 16-1 mit der zuvor z. B. durch Extrusion hergestellten Innenlage 18-1. Das resultierende Produkt, die Deckschicht 12-1 ist in Fig. 2 dargestellt. Die Vorfertigung der zweiten Deckschicht 12-2 erfolgt in gleicher Weise. Alternativ zu einer rein thermischen Verschmelzung der Außenlage 16-1 und der Innenlage 18-1 könnten diese Lagen 16,1, 18-1 z. B. auch unter Einsatz eines Lösungsmittels miteinander verschmolzen werden, durch dessen Applikation beide Materialien, PEEK und PEI, für eine solche Verschmelzung geeignet erweicht (angelöst) werden können.

Abweichend von dem mit den Fig. 1 und 2 veranschaulichten Verfahren kommt in Betracht, bei der Vorfertigung der Außenlage sogleich die Innenlage "aufzulaminieren", d. h. die Einbettung des Fasermaterials in der Außenlage und die Anbindung der Innenlage in einem Schritt, z. B. in einem Formwerkzeug zu bewerkstelligen.

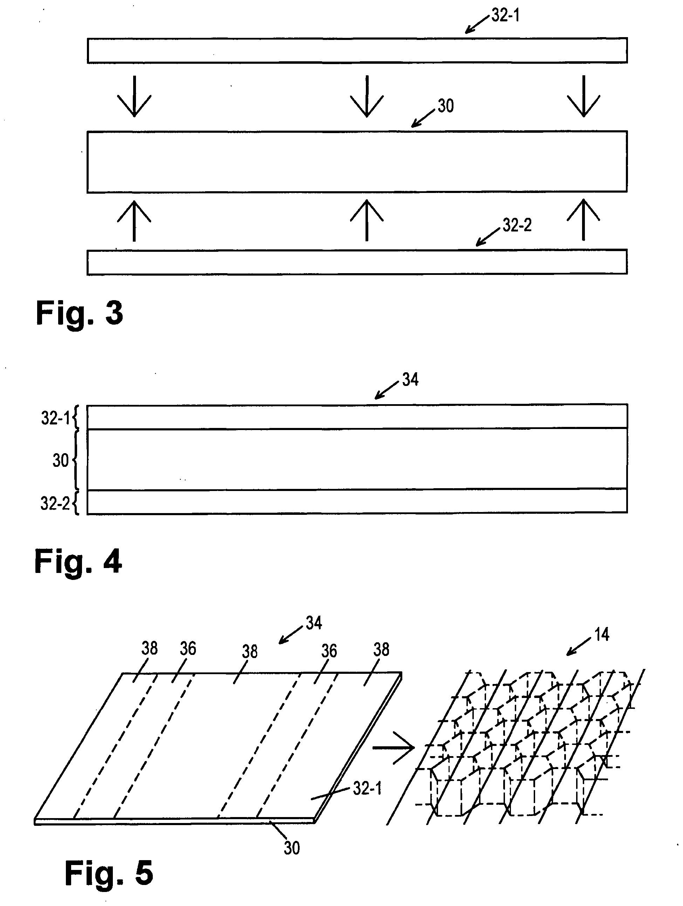

Die Vorfertigung des Kerns 14 ist in den Fig. 3 bis 5 veranschaulicht.

Zunächst wird, wie in Fig. 3 gezeigt, eine vorgefertigte Folie 30 aus PEEK beiderseits mit Folien 32-1 und 32-2 aus PEI beschichtet. Bevorzugt werden die Folie 30 einerseits und die Folien 32-1, 32-2 andererseits kohäsiv miteinander verbunden, d. h. verschmolzen (bevorzugt wieder thermisch).

Das resultierende Produkt ist eine Verbundfolie 34, die in Fig. 4 dargestellt ist.

Sodann wird, wie in Fig. 5 symbolisiert, mit der Verbundfolie 34 als Ausgangsmaterial (Fig. 5 links) durch einen Umformprozess eine den Kern 14 darstellende Faltwabenstruktur geschaffen (Fig. 5 rechts).

Im dargestellten Beispiel wird der Kern 14 somit als eine so genannte Faltwabe bzw. Faltwabenstruktur ausgebildet. Was den hierfür verwendeten Umformprozess anbelangt, so kann vorteilhaft auf diesbezüglichen Stand der Technik zurückgegriffen werden.

Im dargestellten Beispiel wurde ein Umformprozess gewählt, mittels welchem insbesondere auch obere und untere "Wabenstrukturdeckschichten" aus dem entsprechend umgeformten (einschließlich gefalteten) Ausgangsmaterial 34 ausgebildet wurden.

Da diese Wabenstrukturdeckschichten (wie auch die Innenstruktur) aus der Verbundfolie 34 gebildet sind und bei dieser Verbundfolie 34 beide Oberflächen von den Folien 32-1, 32-2 aus PEI, also von einem nicht DCM-resistenten Thermoplastmaterial gebildet sind, ist sichergestellt, dass der aus dem Umformprozess resultierende Kern 14 Außenlagen 20-1, 20-2 aus nicht DCM-resistentem Thermoplastmaterial besitzt.

Letzteres ist von Bedeutung für den letzten Schritt der Herstellung des Sandwichbauteils, der in Fig. 6 veranschaulicht ist. In diesem Schritt wird der vorgefertigte Kern 14 wie dargestellt zwischen den beiden Deckschichten 12-1, 12-2 angeordnet. Dann werden die Innenlagen 18-1, 18-2 der Deckschichten 12-1, 12-2 mit jeweils einer der Außenlagen 20-1, 20-2, nach vorheriger Applikation von DCM zumindest an den miteinander zu verschmelzenden Fügeflächen, unter Anwendung von Druck, und ggf. auch einer erhöhten, z. B. über Raumtemperatur erhöhten Temperatur, verschmolzen. Es resultiert das in Fig. 7 dargestellte fertige Sandwichbauteil 10.

Bei dem oben beschriebenen Ausführungsbeispiel wurde die Folie 30 aus PEEK beiderseits vollflächig mit den Folien 32-1 und 32-2 aus PEI beschichtet.

Daraus resultiert, dass die Innenstruktur des Kerns 14 teilweise aus PEEK (Folie 30) und teilweise aus PEI (Folien 32-1, 32-2) besteht.

Insofern muss beim finalen Herstellungsschritt für das Sandwichbauteil darauf geachtet werden, dass möglichst keine unerwünschte Schädigung, z. B. Erweichung der in der Innenstruktur 22 des Kerns 14 vorhandenen Thermoplastanteile erfolgt, die nicht resistent gegenüber dem betreffenden Lösungsmittel, hier DCM, sind. Dem kann in der Praxis z. B. dadurch Rechnung getragen werden, dass die Prozessbedingungen bei der Applikation des betreffenden Lösungsmittels, hier DCM, so eingestellt werden, dass dieses Lösungsmittel hierbei nicht nennenswert bzw. in schädigenden Mengen in den Bereich der Innenstruktur 22 des Kerns 14 vordringt.

Unter diesem Aspekt ist gemäß einer vorteilhaften Weiterbildung der Bereitstellung der Faltwabenstruktur durch Umformen einer mit nicht lösungsmittelresistentem Thermoplastmaterial beschichteten Folie eines lösungsmittelresistenten Thermoplastmaterials vorgesehen, dass diese Beschichtung in Anpassung an den konkreten Umformprozess nur bereichsweise derart durchgeführt wird, dass das nicht lösungsmittelresistente Thermoplastmaterial an der fertigen Faltwabenstruktur nur im Bereich der Faltwabenstrukturdeckschichten vorhanden ist.

Dementsprechend könnte z. B. das oben beschriebene Ausführungsbeispiel vorteilhaft so modifiziert werden, dass die in den Fig. 4 und 5 veranschaulichte PEI-Beschichtung der PEEK-Folie 30 zu beiden Seiten jeweils nicht vollflächig sondern wie in Fig. 5 gestrichelt eingezeichnet nur in streifenförmigen Bereichen 36 erfolgt, die sich in Verarbeitungsrichtung der Verbundfolie 34 mit nicht-beschichteten Bereichen 38 abwechseln, wobei die in Verarbeitungsrichtung betrachtete Breite der Streifen 36 und 38 derart gewählt ist, dass infolge des Umformprozesses die Innenstruktur 22 des Kerns 14 nur aus den nicht-beschichteten Bereichen 38, also PEEK, gebildet wird, wohingegen aus den PEI-beschichteten Bereichen 36, im Verbund mit der PEEK-Folie 30, die Deckschichten 20-1 und 20-2 des Kerns 14 gebildet werden.

## Patentansprüche

1. Sandwichbauteil mit einer ersten Deckschicht (12-1), einer zweiten Deckschicht (12-2) und einem dazwischen angeordneten Kern (14),
wobei die Deckschichten (12-1, 12-2) jeweils aus einer Außenlage (16-1, 16-2) aus einem faserverstärkten Thermoplastmaterial mit höherer Resistenz gegenüber einem bestimmten Lösungsmittel zur Lösung von Thermoplastmaterialien und damit verschmolzen einer Innenlage (18-1, 18-2) aus einem Thermoplastmaterial mit niedrigerer Resistenz gegenüber dem Lösungsmittel gebildet sind,
wobei der Kern (14) Außenlagen (20-1, 20-2) aufweist, die jeweils aus einem Thermoplastmaterial mit niedrigerer Resistenz gegenüber dem Lösungsmittel gebildet sind, und eine Innenstruktur (22), die ganz oder teilweise aus einem Thermoplastmaterial mit höherer Resistenz gegenüber dem Lösungsmittel gebildet ist,
und wobei die Innenlagen (18-1, 18-2) der Deckschichten (12-1, 12-2) mit jeweils einer der Außenlagen (20-1, 20-2) des Kerns (14) unter Einsatz des Lösungsmittels verschmolzen wurden.

2. Sandwichbauteil nach Anspruch 1, wobei die Thermoplastmaterialien mit niedrigerer Lösungsmittelresistenz einerseits einer Innenlage (18-1, 18-2) einer Deckschicht (12-1, 12-2) und andererseits der damit verschmolzenen Außenlage (20-1, 20-2) des Kerns (14) identisch sind.

3. Sandwichbauteil nach einem der vorangehenden Ansprüche, wobei wenigstens eines der Thermoplastmaterialien ausgewählt ist aus der Gruppe bestehend aus ABS, PA, PBT, PC, PEEK, PEI, PES, PET, PP, PPS, PPSU, PSU.

4. Sandwichbauteil nach einem der vorangehenden Ansprüche, wobei der Kern (14) ein Wabenkern ist.

5. Sandwichbauteil nach Anspruch 4, wobei der Wabenkern (14) eine Faltwabenstruktur ist.

6. Verfahren zur Herstellung eines Sandwichbauteils (10) nach einem der vorangehenden Ansprüche, umfassend die Schritte:
a) Bereitstellen der ersten Deckschicht (12-1), der zweiten Deckschicht (12-2) und des Kerns (14),
b) Anlösen der Innenlagen (18-1, 18-2) der Deckschichten (12-1, 12-2) an den im fertigen Sandwichbauteil (10) dem Kern (14) zugewandten Seiten der Innenlagen (18-1, 18-2) der Deckschichten (12-1, 12-2) durch Applikation des bestimmten Lösungsmittels, und Anlösen der Außenlagen (20-1, 20-2) des Kerns (14) an den im fertigen Sandwichbauteil (10) den Deckschichten (12-1, 12-2) zugewandten Seiten der Außenlagen (20-1, 20-2) des Kerns (14) durch Applikation des Lösungsmittels, und
c) Aneinanderfügen und somit Verschmelzen der angelösten Innenlagen (18-1, 18-2) der Deckschichten (12-1, 12-2) mit jeweils einer der angelösten Außenlagen (20-1, 20-2) des Kerns (14).

7. Verfahren nach Anspruch 6, wobei im Schritt a) zum Bereitstellen der Deckschichten (12-1, 12-2) jeweils eine vorgefertigte Außenlage (16-1, 16-2) mit einer vorgefertigten Innenlage (18-1, 18-2) verschmolzen wird.

8. Verfahren nach Anspruch 6 oder 7, wobei in Schritt a) zum Bereitstellen des Kerns (14) eine mit dem Thermoplastmaterial (32-1, 32-2) mit niedrigerer Lösungsmittelresistenz beschichtete Folie (30) eines Thermoplastmaterials mit höherer Lösungsmittelresistenz zur Ausbildung einer Faltwabenstruktur umgeformt wird.

9. Verfahren nach Anspruch 8, wobei die Folie (30) des Thermoplastmaterials mit höherer Lösungsmittelresistenz mit dem Thermoplastmaterial (32-1, 32-2) mit niedrigerer Lösungsmittelresistenz nur bereichsweise derart beschichtet wird, dass infolge des nachfolgenden Umformprozesses die Innenstruktur (22) des Kerns (14) aus den nicht-beschichteten Bereichen (38) und die Außenlagen (20-1, 20-2) des Kerns (14) aus den beschichteten Bereichen (36) ausgebildet werden.

10. Verfahren nach einem der Ansprüche 6 bis 9, wobei das Lösungsmittel ein organisches Lösungsmittel ist, insbesondere ein Chlorkohlenwasserstoff wie beispielsweise DCM (Dichlormethan).

## Claims

1. Sandwich component with a first cover layer (12-1), a second cover layer (12-2) and a core (14) arranged between them,
wherein the cover layers (12-1, 12-2) are each formed of an outer layer (16-1, 16-2) of a fiber-reinforced thermoplastic material having higher resistance to a particular solvent for dissolving thermoplastic materials and, fused thereto, an inner layer (18-1, 18-2) of a thermoplastic material having lower resistance to the solvent,
wherein the core (14) comprises outer layers (20-1, 20-2) each formed of a thermoplastic material having a lower resistance to the solvent, and an inner structure (22) formed wholly or partly of a thermoplastic material having a higher resistance to the solvent, and
wherein the inner layers (18-1, 18-2) of the cover layers (12-1, 12-2) are each fused with one of the outer layers (20-1, 20-2) of the core (14) using the solvent.

2. Sandwich component according to claim 1, wherein the thermoplastic materials with lower solvent resistance are identical on the one hand to an inner layer (18-1, 18-2) of a cover layer (12-1, 12-2) and on the other hand to the outer layer (20-1, 20-2) of the core (14) fused thereto.

3. Sandwich component according to one of the preceding claims, wherein at least one of the thermoplastic materials is selected from the group consisting of ABS, PA, PBT, PC, PEEK, PEI, PES, PET, PP, PPS, PPSU, PSU.

4. Sandwich component according to any of the foregoing claims, wherein the core (14) is a honeycomb core.

5. Sandwich component according to claim 4, wherein the honeycomb core (14) is a folded honeycomb core structure.

6. Method of producing a sandwich component (10) according to any of the foregoing claims, comprising the steps of:
a) Providing the first cover layer (12-1), the second cover layer (12-2) and the core (14),
b) Dissolving the inner layers (18-1, 18-2) of the cover layers (12-1, 12-2) on the sides of the inner layers (18-1, 18-2) of the cover layers (12-1, 12-2) facing the core (14) in the finished sandwich component (10) by application of the specific solvent, and dissolving the outer layers (20-1, 20-2) of the core (14) on the sides of the outer layers (20-1, 20-2) of the core (14) facing the cover layers (12-1, 12-2) in the finished sandwich component (10) by application of the solvent, and
c) Joining and thus fusing the detached inner layers (18-1, 18-2) of the cover layers (12-1, 12-2) to one another with one of the detached outer layers (20-1, 20-2) of the core (14) each.

7. Method according to claim 6, wherein in step a) for providing the cover layers (12-1, 12-2), a prefabricated outer layer (16-1, 16-2) is fused to a prefabricated inner layer (18-1, 18-2).

8. Method according to claim 6 or 7, wherein in step a) for providing the core (14), a film (30) of a thermoplastic material with higher solvent resistance coated with the thermoplastic material (32-1, 32-2) with lower solvent resistance is formed to form a folded honeycomb structure.

9. Method according to claim 8, wherein the film (30) of thermoplastic material with higher solvent resistance is coated with the thermoplastic material (32-1, 32-2) with lower solvent resistance only in regions in such a way that, as a result of the subsequent forming process, the inner structure (22) of the core (14) is formed from the non-coated regions (38) and the outer layers (20-1, 20-2) of the core (14) are formed from the coated regions (36).

10. Method according to any of claims 6 to 9, wherein the solvent is an organic solvent, in particular a chlorinated hydrocarbon such as DCM (dichloromethane).

## Revendications

1. Composant sandwich avec une première couche de couverture (12-1), une deuxième couche de couverture (12-2) et un noyau (14) disposé entre elles,
dans laquelle les couches de couverture (12-1, 12-2) sont chacune formées d'une couche extérieure (16-1, 16-2) d'un matériau thermoplastique renforcé par des fibres ayant une résistance plus élevée à un solvant particulier pour dissoudre les matériaux thermoplastiques et, fusionnée à celle-ci, une couche intérieure (18-1, 18-2) d'un matériau thermoplastique ayant une résistance plus faible au solvant,
dans lequel le noyau (14) comprend des couches extérieures (20-1, 20-2) formées chacune d'un matériau thermoplastique ayant une résistance inférieure au solvant, et une structure intérieure (22) formée entièrement ou partiellement d'un matériau thermoplastique ayant une résistance supérieure au solvant, et
dans laquelle les couches internes (18-1, 18-2) des couches de couverture (12-1, 12-2) sont chacune fusionnées avec l'une des couches externes (20-1, 20-2) du noyau (14) à l'aide du solvant.

2. Composant sandwich selon la revendication 1, dans lequel les matières thermoplastiques ayant une résistance moindre aux solvants sont identiques d'une part à une couche intérieure (18-1, 18-2) d'une couche de couverture (12-1, 12-2) et d'autre part à la couche extérieure (20-1, 20-2) du noyau (14) fusionnée avec celle-ci.

3. Composant sandwich selon l'une des revendications précédentes, dans lequel au moins l'une des matières thermoplastiques est choisie dans le groupe constitué par ABS, PA, PBT, PC, PEEK, PEI, PES, PET, PP, PPS, PPSU, PSU.

4. Composant sandwich selon l'une des revendications précédentes, dans lequel l'âme (14) est une âme en nid d'abeille.

5. Composant sandwich selon la revendication 4, dans lequel l'âme en nid d'abeille (14) est une structure à âme en nid d'abeille pliée.

6. Procédé de production d'un composant sandwich (10) selon l'une quelconque des revendications précédentes, comprenant les étapes consistant à :
a) Fournir la première couche de couverture (12-1), la deuxième couche de couverture (12-2) et l'âme (14),
b) Dissolution des couches internes (18-1, 18-2) des couches de couverture (12-1, 12-2) sur les côtés des couches internes (18-1, 18-2) des couches de couverture (12-1, 12-2) faisant face au noyau (14) dans le composant sandwich fini (10) par application du solvant spécifique, et la dissolution des couches extérieures (20-1, 20-2) du noyau (14) sur les côtés des couches extérieures (20-1, 20-2) du noyau (14) en regard des couches de couverture (12-1, 12-2) dans le composant sandwich fini (10) par application du solvant, et
c) Assemblage et donc fusion des couches internes détachées (18-1, 18-2) des couches de couverture (12-1, 12-2) entre elles avec une des couches externes détachées (20-1, 20-2) du noyau (14) chacune.

7. Procédé selon la revendication 6, dans lequel, à l'étape a), pour fournir les couches de couverture (12-1, 12-2), une couche extérieure préfabriquée (16-1, 16-2) est fusionnée à une couche intérieure préfabriquée (18-1, 18-2).

8. Procédé selon la revendication 6 ou 7, dans lequel à l'étape a) pour fournir l'âme (14), un film (30) d'un matériau thermoplastique avec une résistance aux solvants plus élevée, revêtu du matériau thermoplastique (32-1, 32-2) avec une résistance aux solvants plus faible, est formé pour former une structure en nid d'abeilles pliée.

9. Procédé selon la revendication 8, dans lequel le film (30) en matière thermoplastique ayant une résistance aux solvants plus élevée est revêtu de la matière thermoplastique (32-1, 32-2) ayant une résistance aux solvants plus faible uniquement par zones de telle sorte que, suite au processus de formage ultérieur, la structure interne (22) de l'âme (14) est formée à partir des zones non revêtues (38) et les couches externes (20-1, 20-2) de l'âme (14) sont formées à partir des zones revêtues (36).

10. Procédé selon l'une des revendications 6 à 9, dans lequel le solvant est un solvant organique, en particulier un hydrocarbure chloré tel que le DCM (dichlorométhane).
